# EUROPEAN PATENT SPECIFICATION

(11) **EP 3 384 620 B1**
(45) Date of publication and mention of the grant of the patent: **30.11.2022**
(21) Application number: 16884366.2
(22) Date of filing: 13.01.2016
(51) Int. Cl.: H04L 1/16

(54) **BIDIRECTIONAL SUBFRAME COMMUNICATION**
BIDIREKTIONALE HILFSRAHMENKOMMUNIKATION
COMMUNICATION DE SOUS-TRAME BIDIRECTIONNELLE

(43) Date of publication of application: 10.10.2018
(73) Proprietor: Lenovo Innovations Limited (Hong Kong), Quarry Bay, Hong Kong (HK)
(72) Inventor: LEI, Haipeng, Beijing 100085 (CN)
(74) Representative: Openshaw & Co.
(86) International application number: PCT/CN2016/070834
(87) International publication number: WO 2017/120803

(56) References cited:
- EP-A1- 2 720 504
- CN-A- 102 065 545
- CN-A- 102 281 099
- CN-A- 103 516 490
- CN-A- 104 601 300
- US-A1- 2014 153 528
- US-A1- 2014 307 593
- US-A1- 2015 250 017
- ITRI: "Signalling mechanism and HARQ timeline for TDD eIMTA", 3GPP DRAFT; R1-131074_SIGNALLING MECHANISM AND HARQ TIMELINE FOR TDD EIMTA_R1_CLEAN, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG1, no. Chicago, USA; 20130415 - 20130419 5 April 2013 (2013-04-05), XP050696735, Retrieved from the Internet: URL:http://www.3gpp.org/ftp/tsg_ran/WG1_RL 1/TSGR1_72b/Docs/ [retrieved on 2013-04-05]
- NEW POSTCOM: "Discussion on different signalling mechanisms for TDD UL-DL reconfiguration", 3GPP DRAFT; R1-130163_DISCUSSION ON DIFFERENT SIGNALLING MECHANISMS FOR TDD UL-DL RECONFIGURATION, 3RD GENERATION PARTNERSHIP PROJECT (3GPP), MOBILE COMPETENCE CENTRE ; 650, ROUTE DES LUCIOLES ; F-069 , vol. RAN WG1, no. Malta; 20130128 - 20130201 19 January 2013 (2013-01-19), XP050663580, Retrieved from the Internet: URL:http://www.3gpp.org/ftp/tsg_ran/WG1_RL 1/TSGR1_72/Docs/ [retrieved on 2013-01-19]

## Description

### FIELD

The subject matter disclosed herein relates to subframe communication and more particularly relates to bidirectional subframe communication in a radio frame.

### BACKGROUND

### DESCRIPTION OF THE RELATED ART

Although the frequency spectrum is limited, significant bandwidth often goes unused because the bandwidth is reserved for transmissions from devices that are not currently transmitting data. US 2015/250017 A1 discloses a method and an apparatus for determining a configuration for a radio frame.

### BRIEF SUMMARY

The invention is defined by the appended set of claims. In the following description, any method and/or apparatus which does not fall within the scope of the appended set of claims should be understood as an example useful for understanding the invention.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a communication system;
Figure 2A is a schematic block diagram illustrating one embodiment of TDD uplink/downlink configurations;
Figure 2B is a schematic block diagram illustrating one embodiment of TDD uplink/downlink configuration data;
Figure 2C is a schematic block diagram illustrating one embodiment of subframe direction data;
Figure 2D is a schematic block diagram illustrating one alternate embodiment of subframe direction data;
Figure 2E is a schematic block diagram illustrating one embodiment of a scheduling pattern;
Figure 2F is a schematic block diagram illustrating one alternate embodiment of a scheduling pattern;
Figure 2G is a schematic block diagram illustrating one embodiment of a TDD indication;
Figure 3A is a schematic block diagram illustrating one embodiment of a downlink grant signaling;
Figure 3B is a schematic block diagram illustrating one alternate embodiment of a downlink signaling;
Figure 3C is a schematic block diagram illustrating one embodiment of an uplink grant signaling;
Figure 3D is a schematic block diagram illustrating one alternate embodiment of an uplink grant signaling;
Figure 4 is a schematic block diagram illustrating one embodiment of a transceiver;
Figure 5A is a schematic flowchart diagram illustrating one embodiment of a bidirectional communication method; and
Figure 5B is a schematic flow chart diagram illustrating one embodiment of a bidirectional communication scheduling method.

### DETAILED DESCRIPTION

As will be appreciated by one skilled in the art, aspects of the embodiments may be embodied as a system, method or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. These code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which comprises one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

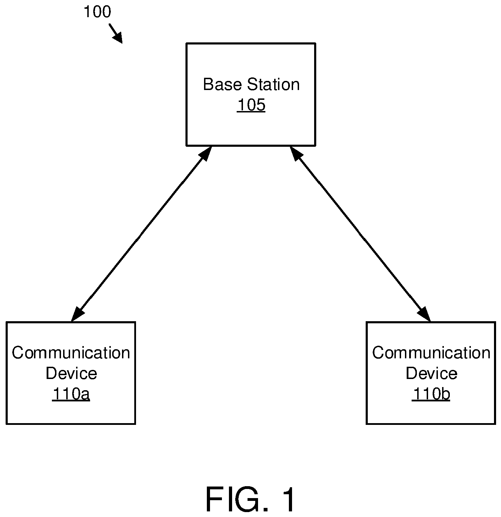

Figure 1 is a schematic block diagram illustrating one embodiment of a communication system 100. The system 100 includes a base station 105, a network 115, and one or more communication devices 110a-b. The base station 105 may communicate with the communication devices 110a-b through a mobile phone network. The base station 105 may be an evolved node B (eNB) Long Term Evolution (LTE) base station. Each communication device 110a-b may be a mobile telephone, a machine-type communications (MTC) device, a tablet computer, a laptop computer, and embedded communication devices in automobiles, kiosks, appliances, and the like.

The system 100 may employ an LTE frame and subframe structure to manage the data that is communicated between the base station 105 and each communication device 110a-b. In one embodiment, the LTE frame structure may be an LTE Time Division Duplex (TDD) structure. The base station 105 may communicate with each communication device 110 within a 10 millisecond (ms) radio frame. Each radio frame may be divided into a plurality of subframes. During a subframe, the base station 105 may transmit downlink data to the communication device 110. Alternatively, the communication device 110 may transmit uplink data to the base station 105 during the subframe.

Unfortunately, limiting a subframe to only either uplink data or downlink data reduces the available bandwidth that may be used for communication between the base station 105 and the communication devices 110a-b. The embodiments described herein support directional communication within a subframe by transmitting a set of TDD uplink/downlink configurations to each communication device 110a-b and further transmitting a TDD indication that indicates one of the TDD uplink/downlink configurations for the communication device 110a-b to employ. As a result, one or more subframes may be employed in full duplex mode. For example, if the base station 105 is transmitting downlink data to a first communication device 110a during a first subframe, the base station 105 may also receive an uplink transmission from the second communication device 110b during the first subframe as will be described hereafter.

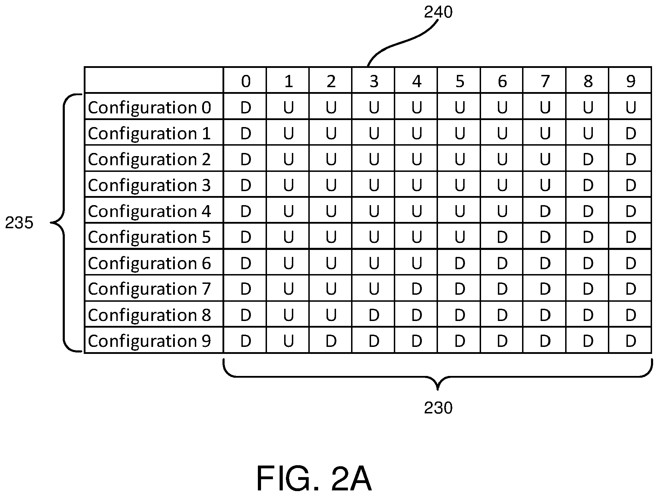

Figure 2A is a schematic block diagram illustrating one embodiment of TDD uplink/downlink configurations 235. A set of TDD uplink/downlink configurations 235 are shown. Each TDD uplink/downlink configuration 235 includes a transmission direction 230 for a specified subframe 240. In the depicted embodiment, the subframes 240 are numbered 0-9. In one embodiment, each of the set of TDD uplink/downlink configurations 235 comprises at least one downlink subframe 240, at least one uplink subframe 240, and at least one bidirectional subframe 240.

In the depicted embodiment, subframe 0 240 is a downlink subframe 240. In addition, subframe 1 240 is an uplink subframe 240. Subframes 2-9 240 are shown as a bidirectional subframes 240.

In one embodiment, a "D" indicates that a given subframe 240 for a given configuration 235 is a downlink subframe 240 that communicates downlink data from the base station 105 to the communication device 110. In addition, "U" may indicate that a given subframe 240 for a given configuration 235 is an uplink subframe 240 that communicates uplink data from the communication device 110 to the base station 105.

In one embodiment, a communication device 110 views each subframe 240 as either an uplink subframe 240 or a downlink subframe 240. However, the base station 105 may view one or more subframes 240 as bidirectional subframes 240. For example, the base station 105 may assign TDD uplink/downlink configuration 0 235 to the first communication device 110a and TDD uplink/downlink configuration 1 235 to the second communication device 110b. The base station 105 may receive uplink data over subframe 9 240 from the first communication device 110a and transmit downlink data over subframe 9 242 the second communication device 110b. As a result, subframe 9 is employed in a full-duplex mode.

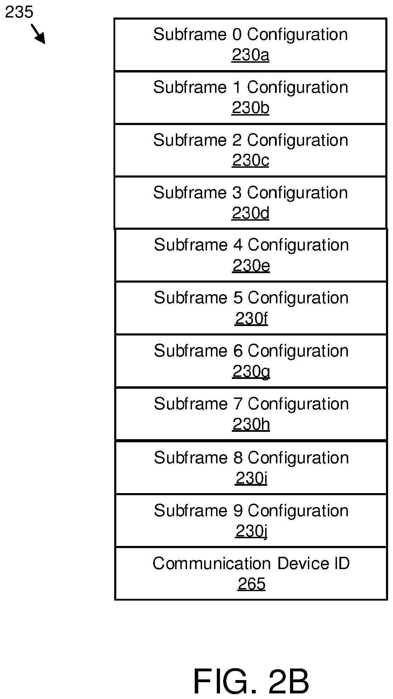

Figure 2B is a schematic block diagram illustrating one embodiment of a TDD uplink/downlink configuration 235. The TDD uplink/downlink configuration 235 may be transmitted from the base station 105 to the communication device 110. The TDD uplink/downlink configuration 235 may comprise one TDD uplink/downlink configuration 235 of the set of TDD uplink/downlink configurations 235 described in Figure 2A. The TDD uplink/downlink configuration 235 may include a plurality of subframe configurations 230a-j. Each subframe configuration 230a-j may specify whether the corresponding subframe 240 is used to communicate downlink data from the base station 105 to the communication device 110 or communicate uplink data from the communication device 110 to the base station 105.

In one embodiment, the TDD uplink/downlink configuration 235 includes a communication device identifier 265. The communication device identifier 265 may associate the TDD uplink/downlink configuration 235 with a given communication device 110. In a certain embodiment, a subframe configuration 230a-j may specify that the corresponding subframe communicates bidirectional data including uplink data and downlink data in a full duplex mode.

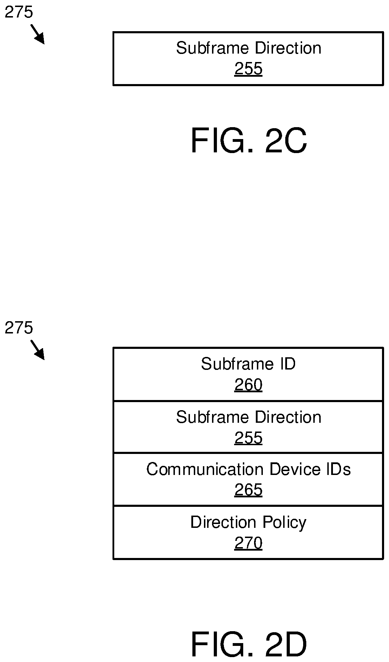

Figure 2C is a schematic block diagram illustrating one embodiment of subframe direction data 275. The subframe direction data 275 may be organized as a data structure that is transmitted from the base station 105. In the depicted embodiment, the subframe direction data 275 includes a subframe direction 255. The subframe direction 255 may be a value that indicates the direction data is transmitted over the corresponding subframe 240. For example, a first value such as a binary one may indicate that downlink data is transmitted over the corresponding subframe 240. In addition, a second value such as a binary zero may indicate that uplink data is transmitted over the corresponding subframe 240.

Figure 2D is a schematic block diagram illustrating one alternate embodiment of subframe direction data 275. The subframe direction data 275 may be organized as a data structure that is transmitted from the base station 105 to a communication device 110. In the depicted embodiment, the subframe direction data 275 includes a subframe identifier 260, the subframe direction 255, communication device identifiers 265, and a direction policy 270.

The subframe identifier 260 may identify a corresponding subframe 240 of a radio frame. The subframe direction 255 may be of value that indicates the direction data is transmitted over the corresponding subframe 240.

In one embodiment, the communication device identifiers 265 includes identifiers for communication devices 110 that communicate with the base station 105 over the corresponding subframe 240. For example, the communication device identifiers 265 may include the identifiers for a first communication device 110a and a second communication device 110b.

In one embodiment, the direction policy 270 includes one or more rules for assigning the subframe direction 255 of the corresponding subframe 240 and for selecting the communication devices 110 that communicate using the corresponding subframe 240. In a certain embodiment, the direction policy 270 may limit the number of communication devices 110 that communicate using the corresponding subframe 240. For example, the direction policy 270 may only allow two communication devices 110 to employ the corresponding subframe 240.

In addition, the direction policy 270 may specify a minimum geographic separation for the communication devices 110. For example, the direction policy 270 may specify that the communication devices 110 are separated by at least 1 kilometer (km).

In one embodiment, the direction policy 270 may specify a minimum transmission power difference between the signals of the communication devices 110. For example, the direction policy 270 may specify a minimum transmission power difference of 2.0 dB measured at the base station 105 between the signals of the first communication device 110a and the second communication device 110b.

In one embodiment, the direction policy 270 may determine when the corresponding subframe 240 is used to communicate both downlink data and uplink data. For example, the direction policy 270 may determine to use the corresponding subframe 240 to communicate both downlink data and uplink data in response to bandwidth utilization exceeding a bandwidth threshold. In addition, the direction policy 270 may determine which communication devices 110 may communicate over the corresponding subframe 240. For example, the direction policy 270 may determine to use communication devices 110 with a geographic separation that exceeds a geographic threshold and with an angular difference relative to the base station 105 of between 90 and 180 degrees.

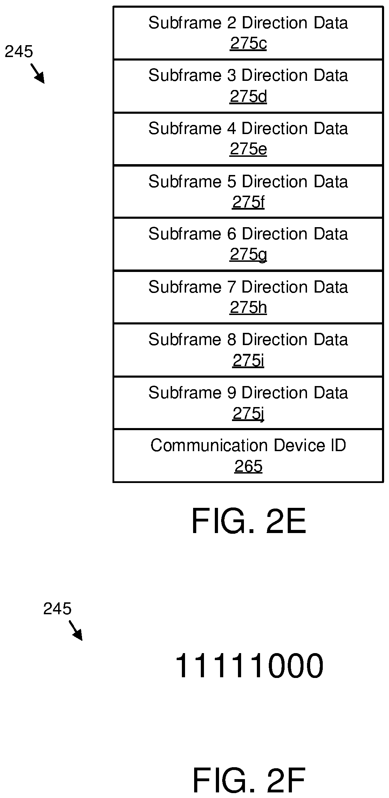

Figure 2E is a schematic block diagram illustrating one embodiment of a scheduling pattern 245. The scheduling pattern 245 may be organized as a data structure and transmitted between the base station 105 and a communication device 110. The scheduling pattern 245 may comprise a plurality of subframe direction data 275c-j that correspond to all the bidirectional subframes 240 in one radio frame and that schedule one or more bidirectional subframes 240 for one of a downlink transmission and an uplink transmission for the base station 105 and/or communication device 110. The scheduling pattern 245 may be for a specific communication device 110 indicated by a communication device identifier 265. The scheduling pattern 245 may indicate which of one or more subframes 240 are scheduled to carry downlink data or uplink data. In the depicted embodiment, the scheduling pattern 245 includes a plurality of subframe direction data 275c-j. The scheduling pattern 245 may only include subframe direction data 275 for subframes 240 that may either carry downlink data or uplink data. For example, if subframe 0 240 only communicates downlink data and subframe 1 240 only communicates uplink data, then no subframe direction data 275 is included in the scheduling pattern 245 for subframe 0 240 and subframe 1 240.

Figure 2F is a schematic block diagram illustrating one alternate embodiment of a scheduling pattern 245. In the depicted embodiment, the scheduling pattern 245 comprises a bitmap of binary values that correspond to all the bidirectional subframes 240 in one radio frame and that schedules one or more bidirectional subframes for one of a downlink transmission and an uplink transmission for the base station 105 and/or communication device 110. Each binary value may be the value of the subframe direction 255. For example, for downlink data transmission, the depicted scheduling pattern 245 in downlink grant signaling for one communication device may indicate that subframes 2-6 240 carry downlink data and subframes 7-9 240 do not carry downlink data. Correspondingly, for uplink data transmission, the depicted scheduling pattern 245 in uplink grant signaling for one communication device may indicate that subframe 7-9 240 may be used to carry uplink data and subframes 2-6 240 may not be used to carry uplink data.

In one embodiment, the communication device 110 employs the scheduling pattern 245 to determine when to transmit uplink data and receive downlink data over the bidirectional subframes 240 as will be described hereafter.

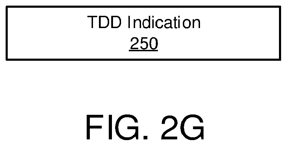

Figure 2G is a schematic block diagram illustrating one embodiment of a TDD indication 250. The TDD indication 250 may be organized as a data structure that is transmitted by the base station 105. The TDD indication 250 may be transmitted in a given downlink subframe 240. A transmission direction of a bidirectional subframe may be derived from the TDD indication 250.

In one embodiment, the TDD indication 250 indicates one TDD downlink/uplink configuration 235 of the plurality of TDD downlink/uplink configurations 235. The TDD indication 250 may be an index to one of the TDD downlink/uplink configurations 235. The TDD indication 250 may be specified in one of a downlink grant signaling, an uplink grant signaling, and a DCI format 3/3A with a pre-assigned communication-device-specific index

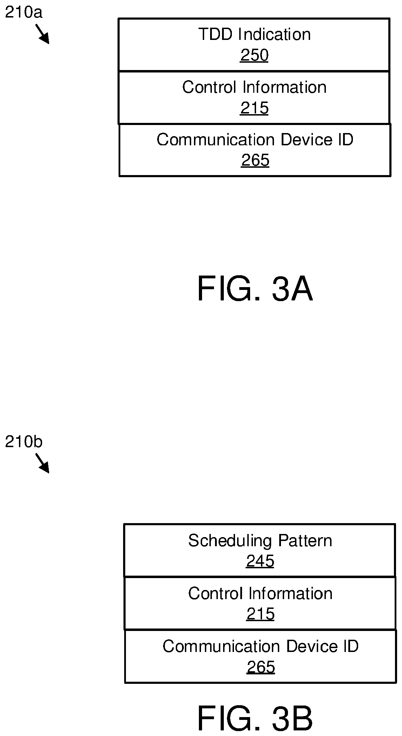

Figure 3A is a schematic block diagram illustrating one embodiment of a downlink grant signaling 210a. The downlink grant signaling 210a may be organized as a data structure that is transmitted by the base station 105. In the depicted embodiment, the downlink grant signaling 210a includes the TDD indication 250 and control information 215 associated with downlink data transmission. The control information 215 may include other relevant information. In one embodiment, the downlink grant signaling 210 includes a communication device identifier 265. The communication device identifier 265 may identify a target communication device 110.

Figure 3B is a schematic block diagram illustrating one alternate embodiment of a downlink grant signaling 210b. The downlink grant signaling 210b may be organized as a data structure that is transmitted by the base station 105. In the depicted embodiment, the downlink grant signaling 210b includes the scheduling pattern 245, the control information 215 associated with the downlink data transmission, and the communication device identifier 265.

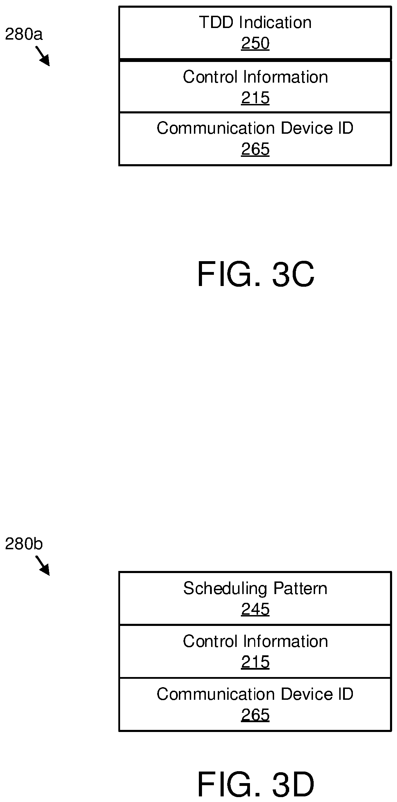

Figure 3C is a schematic block diagram illustrating one embodiment of an uplink grant signaling 280a. The uplink grant signaling 280a may be organized as a data structure that is transmitted by the base station 105. In the depicted embodiment, the uplink grant signaling 280a includes the TDD indication 250 and control information 215 associated with uplink transmission data. In one embodiment, the uplink grant signaling 280a includes a communication device identifier 265. The communication device identifier 265 may identify a target communication device 110.

Figure 3D is a schematic block diagram illustrating one alternate embodiment of an uplink grant signaling 280b. The uplink grant signaling 280b may be organized as a data structure that is transmitted by the base station 105. In the depicted embodiment, the uplink grant signaling 280b includes the scheduling pattern 245, the control information 215 associated with uplink transmission data, and the communication device identifier 265.

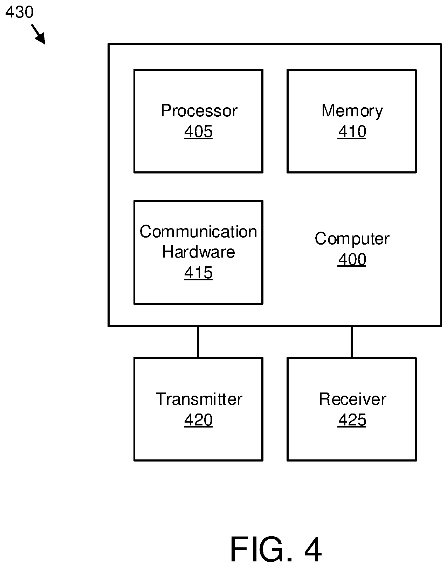

Figure 4 is a schematic block diagram illustrating one embodiment of a transceiver 430. The transceiver 430 may be embodied in the base station 105. Alternatively, the transceiver 430 may be embodied in each communication device 110. In the depicted embodiment, the transceiver 430 includes a computer 400, a transmitter 420, and receiver 425. The transmitter 420 may transmit radio signals. The receiver 425 may receive radio signals.

The computer 400 may include a processor 405, a memory 410, and communication hardware 415. The memory 410 may include a semiconductor storage device, hard disk drive, an optical storage device, a micromechanical storage device, or combinations thereof. The memory 410 may store code. The processor 405 may execute the code. The communication hardware may manage communications between the processor 405 and the transmitter 420 and the receiver 425.

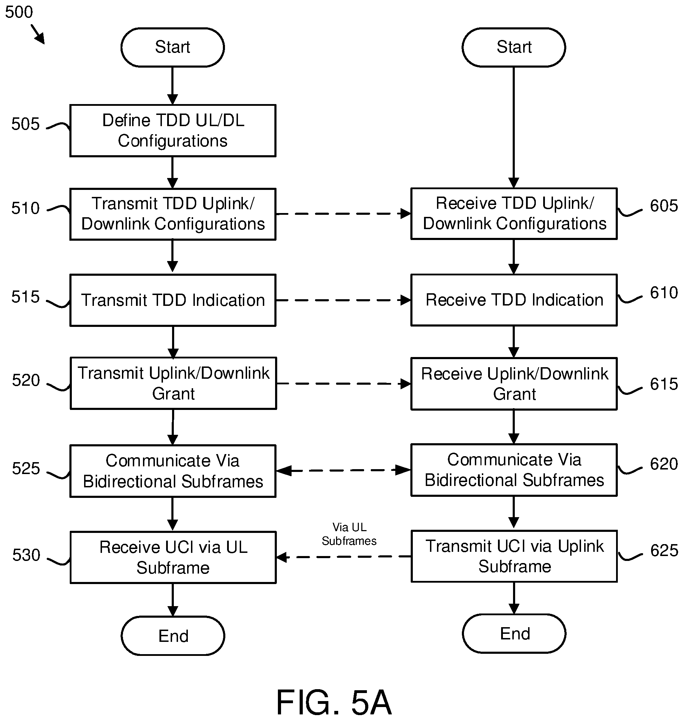

Figure 5A is a schematic flowchart diagram illustrating one embodiment of a bidirectional communication method 500. The method 500 may enable bidirectional communication over one or more subframes 240 between the base station 105 and the communication device 110. For simplicity, the method 500 is described for communication between one base station 105 and one communication device 110. However, the method 500 may be applied to one or more base stations 105 and one or more communication devices 110. The base station 105 may perform a portion of the method 500. In addition, the communication device 110 may perform a portion of the method 500.

The method 500 starts, and in one embodiment, the base station 105 defines 505 a set of TDD uplink/downlink configurations 235. Each TDD uplink/downlink configuration 235 of the set of TDD uplink/downlink configurations 235 may be defined 505 as a function of a number of communication devices 110 in communication with the base station 105, an average data rate of transmissions to the communication devices 110 and transmissions received from the communication devices 110, and a target transmission latency. In one embodiment, the base station 105 may select a predefined set of TDD uplink/downlink configurations 235 in a TDD specification. The TDD specification may not be transmitted to the communication device 110.

Each TDD uplink/downlink configuration 235 of the set of TDD uplink/downlink configurations 235 may comprise at least one downlink subframe 240, at least one uplink subframe 240, and at least one bidirectional subframe 240. In one embodiment, a downlink control signaling or an uplink control signaling are only carried in the at least one downlink subframe 240 such as subframe 0 240. In addition, uplink control information 215 may only be carried in the at least one uplink subframe 240 such as subframe 1 240. In one embodiment, each TDD uplink/downlink configuration 235 includes only one downlink subframe 240 and only one uplink subframe 240.

The base station 105 may transmit 510 the set of TDD uplink/downlink configurations 235. In one embodiment, the transmission 510 of the set of TDD uplink/downlink configurations 235 may include the communication device identifier 265 for a target communication device 110. The communication device 110 may receive 605 the set of TDD uplink/downlink configurations 235. In one embodiment, the communication device 110 receives 605 the set of TDD uplink/downlink configurations 235 if the communication device 110 corresponds to the communication device identifier 265. The set of TDD uplink/downlink configurations 235 may be transmitted 510 and received 605 via a high layer signaling.

The base station 105 may further transmit 515 the TDD indication 250. In one embodiment, the transmission 515 of the TDD indication 250 includes the communication device identifier 265 for the communication device 110. The communication device 110 may receive 610 the TDD indication 250. In one embodiment, the communication device 110 receives 610 the TDD indication 250 if the communication device 110 corresponds to the communication device identifier 265.

The TDD indication 250 may indicate one TDD uplink/downlink configuration 235 of the set of TDD uplink/downlink configurations 235 to the communication device 110. In one embodiment, the base station 105 transmits 515 the TDD indication 250 in one of an uplink grant signaling 280 and a downlink grant signaling 210.

In one embodiment, the base station 105 transmits 520 one of the uplink grant signaling 280 and the downlink grant 210. The uplink grant signaling 280 or downlink grant 210 may be transmitted via the at least one downlink subframe 240. The communication device 110 may receive 615 the uplink grant signaling 280 or the downlink grant 210. In one embodiment, the communication device 110 receives 615 the uplink grant signaling 280 or the downlink grant signaling 210 if the communication device 110 corresponds to the communication device identifier 265 of the uplink grant signaling 280 or the downlink grant signaling 210.

The communication device 110 may communicate 620 uplink/downlink data with the base station 105 via the bidirectional subframes 240 according to the indicated TDD uplink/downlink configuration 235 indicated by the TDD indication 250. The base station 105 may communicate 525 uplink/downlink data with the communication device 110 via the bidirectional subframes 240 according to the indicated TDD uplink/downlink configuration 235 indicated by the TDD indication 250. For example, the TDD indication 250 may indicate TDD uplink/downlink configuration 4 235 of Figure 2A. As a result, the communication device 110 may transmit uplink data over subframes 2-6 240 and the base station 105 may transmit downlink data over subframes 7-9 240.

The communication device 110 may transmit 625 Uplink Control Information (UCI) via the at least one uplink subframe 240 and the method 500 ends. The base station 105 may receive 530 the UCI via the at least one uplink subframe 240 and the method 500 ends.

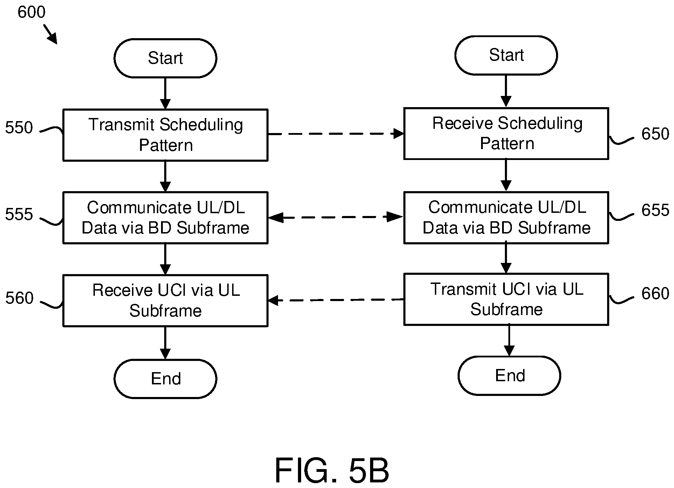

Figure 5B is a schematic flow chart diagram illustrating one embodiment of a bidirectional communication scheduling method 600. The method 600 may schedule bidirectional full-duplex communication over one or more subframes 240. For simplicity, the method 600 is described for communication between one base station 105 and one communication device 110. However, the method 600 may be performed by one or more base stations 105 and one or more communication devices 110. The base station 105 may perform a portion of the method 600. In addition, the communication device 110 may perform a portion of the method 600.

The method 600 starts, and in one embodiment, the base station 105 transmits 550 a scheduling pattern 245 to the communication device 110. The scheduling pattern 245 may be transmitted 550 in one of a downlink grant signaling 210 and an uplink grant signaling 280.

The downlink grant signaling 210 or the uplink grant signaling 280 may be transmitted 550 in a given downlink subframe 240 of the at least one downlink subframes 240.

The communication device 110 may receive 650 the scheduling pattern 245. In one embodiment, the communication device 110 receives 650 the scheduling pattern 245 if the communication device 110 corresponds to the communication device identifier 265 of the scheduling pattern 245, downlink grant signaling 210, and/or uplink grant signaling 280.

The communication device 110 may communicate 655 uplink/downlink data via the bidirectional subframes 240 according to the scheduling pattern 245. In addition, the base station 105 may communicate 555 uplink/downlink data via the bidirectional subframes 240 according to the scheduling pattern 245. For example, if the base station 105 transmits 550 and the communication device 110 receives 650 the scheduling pattern 245 of Figure 2F, the base station 105 may transmit downlink data via subframes 2-6 240 and the communication device 110 may transmit uplink data via subframes 7-9 240.

The communication device 110 may transmit 660 Uplink Control Information (UCI) via the at least one uplink subframe 240 and the method 600 ends. The base station 105 may receive 560 the UCI via the at least one uplink subframe 240 and the method 600 ends.

The embodiments transmit the set of TDD uplink/downlink configurations 235 from the base station 105 to the communication device 110. In addition, the embodiments transmit the TDD indication 250, indicating one TDD uplink/downlink configuration 235 of the set of TDD uplink/downlink configurations 235 to the communication device 110. The communication device 110 and the base station 105 may communicate uplink/downlink data according to the indicated TDD uplink/downlink configuration 235.

In addition, the base station 105 may transmit the scheduling pattern 245 to the communication device 110. The communication device 110 and the base station 105 may communicate the uplink/downlink data over one or more bidirectional subframes 240 according to the scheduling pattern 245. As a result, the embodiments enable bidirectional full-duplex transmissions over one or more subframes 240, increasing the available bandwidth of each radio frame.

Embodiments may be practiced in other specific forms. The described embodiments are to be considered in all respects only as illustrative and not restrictive. The scope of the invention is, therefore, indicated by the appended claims.

## Claims

1. A method in a 3GPP system, comprising:
transmitting, from a base station, a set of Time Division Duplex, TDD, uplink/downlink configurations (235) to a first communication device (110a) and a second communication device (110b), wherein each TDD uplink/downlink configuration of the set of TDD uplink/downlink configurations comprises at least one downlink subframe, at least one uplink subframe, and at least one bidirectional subframe;
transmitting, from the base station to each of the first and second communication devices, a TDD indication that indicates one TDD uplink/downlink configuration of the set of TDD uplink/downlink configurations for that communication device;
receiving, by the base station from the first communication device, uplink data during a particular bidirectional subframe according to the TDD uplink/downlink configuration indicated to the first communication device;
transmitting, from the base station to the second communication device, downlink data during the particular bidirectional subframe according to the TDD uplink/downlink configuration indicated to the second communication device.

2. The method of claim 1, the method further comprising:
receiving Uplink Control Information, UCI, from at least one of the first and second communication devices (110a, 110b) over the at least one uplink subframe.

3. The method of claim 1, the method further comprising:
transmitting a scheduling pattern to at least one of the first and second communication devices (110a, 110b) in one of a downlink grant signaling and an uplink grant signaling transmitted in a given downlink subframe; and
communicating uplink/downlink data with the at least one of the first and second communication devices over one or more bidirectional subframes of the at least one bidirectional subframe according to the scheduling pattern.

4. The method of claim 3, wherein the scheduling pattern comprises a bitmap corresponding to all the bidirectional subframes in one radio frame and schedules the one or more bidirectional subframes for one of a downlink transmission and an uplink transmission for the at least one of the first and second communication devices (110a, 110b).

5. The method of claim 1, wherein the TDD indication is transmitted in a given downlink subframe and a transmission direction of a given bidirectional subframe is derived from the TDD indication.

6. The method of claim 1, wherein the TDD indication is specified in one of a downlink grant signaling, an uplink grant signaling, and a DCI format 3/3A with a pre-assigned communication-device-specific index.

7. A method in a 3GPP system, comprising:
receiving, by each of a first communication device (110a) and a second communication device (110b), a set of Time Division Duplex, TDD, uplink/downlink configurations (235) from a base station (105), wherein each TDD uplink/downlink configuration of the set of TDD uplink/downlink configurations comprises at least one downlink subframe, at least one uplink subframe, and at least one bidirectional subframe;
receiving, from the base station by each of the first and second communication devices, a TDD indication that indicates one TDD uplink/downlink configuration of the set of TDD uplink/downlink configurations for that communication device;
transmitting, to the base station by the first communication device, uplink data during a particular bidirectional subframe according to the TDD uplink/downlink configuration indicated to the first communication device;
receiving, by the second communication device from the base station, downlink data during the particular bidirectional subframe according to the TDD uplink/downlink configuration indicated to the second communication device.

8. The method of claim 7, the method further comprising:
transmitting Uplink Control Information, UCI, to the base station (105) over the at least one uplink subframe.

9. The method of claim 7, the method further comprising:
receiving a scheduling pattern from the base station (105) in one of a downlink grant signaling and an uplink grant signaling transmitted in a given downlink subframe; and
communicating uplink/downlink data with the base station over one or more bidirectional subframes of the at least one bidirectional subframe according to the scheduling pattern.

10. The method of claim 9, wherein the scheduling pattern comprises a bitmap corresponding to all the bidirectional subframes in one radio frame and schedules the one or more bidirectional subframes for one of downlink transmission and uplink transmission for a specific communication device (110a, 110b) and the set of TDD uplink/downlink configurations are one of received via high layer signaling and defined in a TDD specification.

11. An apparatus comprising means for performing the method of any of claims 1 to 6.

12. An apparatus comprising means for performing the method of any of claims 7 to 10.

## Patentansprüche

1. Verfahren in einem 3GPP-System, umfassend:
Übertragen, von einer Basisstation, eines Satzes von Zeitduplex-, TDD-, Uplink-/Downlink-Konfigurationen (235) zu einer ersten Kommunikationsvorrichtung (110a) und einer zweiten Kommunikationsvorrichtung (110b), wobei jede TDD-Uplink-/Downlink-Konfiguration des Satzes von TDD-Uplink-/Downlink-Konfigurationen mindestens einen Downlink-Hilfsrahmen, mindestens einen Uplink-Hilfsrahmen und mindestens einen bidirektionalen Hilfsrahmen umfasst;
Übertragen, von der Basisstation zu jeder der ersten und zweiten Kommunikationsvorrichtung, einer TDD-Anzeige, die eine TDD-Uplink-/Downlink-Konfiguration des Satzes von TDD-Uplink-/Downlink-Konfigurationen für diese Kommunikationsvorrichtung anzeigt;
Empfangen, durch die Basisstation von der ersten Kommunikationsvorrichtung, von Uplink-Daten während eines besonderen bidirektionalen Hilfsrahmens gemäß der TDD-Uplink-/Downlink-Konfiguration, die der ersten Kommunikationsvorrichtung angezeigt wird;
Übertragen, von der Basisstation an die zweite Kommunikationsvorrichtung, von Downlink-Daten während des besonderen bidirektionalen Hilfsrahmens gemäß der TDD-Uplink-/Downlink-Konfiguration, die der zweiten Kommunikationsvorrichtung angezeigt wird.

2. Verfahren nach Anspruch 1, wobei das Verfahren ferner umfasst:
Empfangen von Uplink-Steuerungsinformationen, UCI, von mindestens einer der ersten und der zweiten Kommunikationsvorrichtung (110a, 110b) über den mindestens einen Uplink-Hilfsrahmen.

3. Verfahren nach Anspruch 1, wobei das Verfahren ferner umfasst:
Übertragen eines Planungsmusters an mindestens eine der ersten und der zweiten Kommunikationsvorrichtung (110a, 110b) in einer von einer Downlink-Genehmigungssignalisierung und einer Uplink-Genehmigungssignalisierung, die in einem gegebenen Downlink-Hilfsrahmen übertragen wird; und
Kommunizieren von Uplink/Downlink-Daten mit der mindestens einen der ersten und der zweiten Kommunikationsvorrichtung über einen oder mehrere bidirektionale Hilfsrahmen des mindestens einen bidirektionalen Hilfsrahmens gemäß dem Planungsmuster.

4. Verfahren nach Anspruch 3, wobei das Planungsmuster eine Bitmap umfasst, die allen bidirektionalen Hilfsrahmen in einem Funkrahmen entspricht und den einen oder die mehreren bidirektionalen Hilfsrahmen für eine von einer Downlink-Übertragung und einer Uplink-Übertragung für die mindestens eine der ersten und der zweiten Kommunikationsvorrichtung (110a, 110b) plant.

5. Verfahren nach Anspruch 1, wobei die TDD-Anzeige in einem gegebenen Downlink-Hilfsrahmen übertragen wird und eine Übertragungsrichtung eines gegebenen bidirektionalen Hilfsrahmens aus der TDD-Anzeige abgeleitet wird.

6. Verfahren nach Anspruch 1, wobei die TDD-Anzeige in einem von einer Downlink-Genehmigungssignalisierung, einer Uplink-Genehmigungssignalisierung und einem DCI-Format 3/3A mit einem vordefinierten kommunikationsvorrichtungsspezifischen Index spezifiziert wird.

7. Verfahren in einem 3GPP-System, umfassend:
Empfangen, durch jede einer ersten Kommunikationsvorrichtung (110a) und einer zweiten Kommunikationsvorrichtung (110b), eines Satzes von Zeitduplex-, TDD-, Uplink-/Downlink-Konfigurationen (235) von einer Basisstation (105), wobei jede TDD-Uplink-/Downlink-Konfiguration des Satzes von TDD-Uplink-/Downlink-Konfigurationen mindestens einen Downlink-Hilfsrahmen, mindestens einen Uplink-Hilfsrahmen und mindestens einen bidirektionalen Hilfsrahmen umfasst;
Empfangen, von der Basisstation durch jede der ersten und der zweiten Kommunikationsvorrichtung, einer TDD-Anzeige, die eine TDD-Uplink-/Downlink-Konfiguration des Satzes von TDD-Uplink-/Downlink-Konfigurationen für diese Kommunikationsvorrichtung anzeigt;
Übertragen, an die Basisstation durch die erste Kommunikationsvorrichtung, von Uplink-Daten während eines besonderen bidirektionalen Hilfsrahmens gemäß der TDD-Uplink-/Downlink-Konfiguration, die der ersten Kommunikationsvorrichtung angezeigt wird;
Empfangen, durch die zweite Kommunikationsvorrichtung von der Basisstation, von Downlink-Daten während des besonderen bidirektionalen Hilfsrahmens gemäß der TDD-Uplink-/Downlink-Konfiguration, die der zweiten Kommunikationsvorrichtung angezeigt wird.

8. Verfahren nach Anspruch 7, wobei das Verfahren ferner umfasst:
Übertragen von Uplink-Steuerungsinformationen, UCI, an die Basisstation (105) über den mindestens einen Uplink-Hilfsrahmen.

9. Verfahren nach Anspruch 7, wobei das Verfahren ferner umfasst:
Empfangen eines Planungsmusters von der Basisstation (105) in einer von einer Downlink-Genehmigungssignalisierung und einer Uplink-Genehmigungssignalisierung, die in einem gegebenen Downlink-Hilfsrahmen übertragen wird; und
Kommunizieren von Uplink-/Downlink-Daten mit der Basisstation über einen oder mehrere bidirektionale Hilfsrahmen des mindestens einen bidirektionalen Hilfsrahmens gemäß dem Planungsmuster.

10. Verfahren nach Anspruch 9, wobei das Planungsmuster eine Bitmap umfasst, die allen bidirektionalen Hilfsrahmen in einem Funkrahmen entspricht und den einen oder die mehreren bidirektionalen Hilfsrahmen für eine der Downlink-Übertragung und Uplink-Übertragung für eine spezifische Kommunikationsvorrichtung (110a, 110b) plant und der Satz von TDD-Uplink-/Downlink-Konfigurationen eine von einer mit hoher Schicht empfangenen und in einer TDD-Spezifikation definierten Signalisierung ist.

11. Vorrichtung, umfassend Mittel zum Durchführen des Verfahrens nach einem der Ansprüche 1 bis 6.

12. Vorrichtung, umfassend Mittel zum Durchführen des Verfahrens nach einem der Ansprüche 7 bis 10.

## Revendications

1. Procédé dans un système 3GPP, comprenant :
la transmission, à partir d'une station de base, d'un ensemble de configurations de liaison montante/liaison descendante à duplexage par répartition temporelle, TDD, (235) à un premier dispositif de communication (110a) et un second dispositif de communication (110b), dans lequel chaque configuration de liaison montante/liaison descendante à TDD de l'ensemble de configurations de liaison montante/liaison descendante à TDD comprend au moins une sous-trame de liaison descendante, au moins une sous-trame de liaison montante, et au moins une sous-trame bidirectionnelle ;
la transmission, à partir de la station de base à chacun des premier et second dispositifs de communication, d'une indication de TDD qui indique une configuration de liaison montante/liaison descendante à TDD de l'ensemble de configurations de liaison montante/liaison descendante à TDD pour ce dispositif de communication ;
la réception, par la station de base à partir du premier dispositif de communication, de données de liaison montante pendant une sous-trame bidirectionnelle particulière selon la configuration de liaison montante/liaison descendante à TDD indiquée pour le premier dispositif de communication ;
la transmission, à partir de la station de base au second dispositif de communication, de données de liaison descendante pendant la sous-trame bidirectionnelle particulière selon la configuration de liaison montante/liaison descendante à TDD indiquée pour le second dispositif de communication.

2. Procédé selon la revendication 1, le procédé comprenant en outre :
la réception d'informations de commande de liaison montante, UCI, à partir du premier et/ou second dispositif de communication (110a, 110b) sur l'au moins une sous-trame de liaison montante.

3. Procédé selon la revendication 1, le procédé comprenant en outre :
la transmission d'un schéma de planification au premier et/ou second dispositif de communication (110a, 110b) dans l'une d'une signalisation d'octroi de liaison descendante et d'une signalisation d'octroi de liaison montante transmis dans une sous-trame de liaison descendante donnée ; et
la communication de données de liaison montante/liaison descendante avec le premier et/ou second dispositif de communication sur une ou plusieurs sous-trames bidirectionnelles de l'au moins une sous-trame bidirectionnelle selon le schéma de planification.

4. Procédé selon la revendication 3, dans lequel le schéma de planification comprend une table de bits correspondant à toutes les sous-trames bidirectionnelles dans une trame radio et planifie la ou les sous-trames bidirectionnelles pour l'une d'une transmission en liaison descendante et d'une transmission en liaison montante pour le premier et/ou second dispositif de communication (110a, 110b).

5. Procédé selon la revendication 1, dans lequel l'indication de TDD est transmise dans une sous-trame de liaison descendante donnée et une direction de transmission d'une sous-trame bidirectionnelle donnée est dérivée de l'indication de TDD.

6. Procédé selon la revendication 1, dans lequel l'indication de TDD est spécifiée dans l'une d'une signalisation d'octroi de liaison descendante, d'une signalisation d'octroi de liaison montante et d'un format DCI 3/3A avec un index spécifique au dispositif de communication pré-attribué.

7. Procédé dans un système 3GPP, comprenant :
la réception, par chacun d'un premier dispositif de communication (110a) et d'un second dispositif de communication (110b), d'un ensemble de configurations de liaison montante/liaison descendante à duplexage par répartition temporelle, TDD, (235) à partir d'une station de base (105), chaque configuration de liaison montante/liaison descendante à TDD de l'ensemble de configurations de liaison montante/liaison descendante à TDD comprenant au moins une sous-trame de liaison descendante, au moins une sous-trame de liaison montante et au moins une sous-trame bidirectionnelle ;
la réception, à partir de la station de base par chacun des premier et second dispositifs de communication, d'une indication de TDD qui indique une configuration de liaison montante/liaison descendante à TDD de l'ensemble de configurations de liaison montante/liaison descendante à TDD pour ce dispositif de communication ;
la transmission, à la station de base par le premier dispositif de communication, de données de liaison montante pendant une sous-trame bidirectionnelle particulière selon la configuration de liaison montante/liaison descendante à TDD indiquée pour le premier dispositif de communication ;
la réception, par le second dispositif de communication à partir de la station de base, de données de liaison descendante pendant la sous-trame bidirectionnelle particulière selon la configuration de liaison montante/liaison descendante à TDD indiquée pour le second dispositif de communication.

8. Procédé selon la revendication 7, le procédé comprenant en outre :
la transmission d'informations de commande de liaison montante, UCI, à la station de base (105) sur l'au moins une sous-trame de liaison montante.

9. Procédé selon la revendication 7, le procédé comprenant en outre :
la réception d'un schéma de planification à partir de la station de base (105) dans l'une d'une signalisation d'octroi de liaison descendante et d'une signalisation d'octroi de liaison montante transmis dans une sous-trame de liaison descendante donnée ; et
la communication de données de liaison montante/liaison descendante avec la station de base sur une ou plusieurs sous-trames bidirectionnelles de l'au moins une sous-trame bidirectionnelle selon le schéma de planification.

10. Procédé selon la revendication 9, dans lequel le schéma de planification comprend une table de bits correspondant à toutes les sous-trames bidirectionnelles dans une trame radio et planifie l'une ou plusieurs sous-trames bidirectionnelles pour l'une d'une transmission de liaison descendante et d'une transmission de liaison montante pour un dispositif de communication spécifique (110a, 110b) et l'ensemble de configurations de liaison montante/liaison descendante à TDD est l'un de ceux reçus par l'intermédiaire d'une signalisation de couche supérieure et définis dans une spécification de TDD.

11. Appareil comprenant un moyen pour réaliser le procédé selon l'une quelconque des revendications 1 à 6.

12. Appareil comprenant un moyen pour réaliser le procédé selon l'une quelconque des revendications 7 à 10.
